**Europäisches Patentamt**

**European Patent Office**

**Office européen des brevets**

(11) Publication number: **0 162 818**

**B1**

(12) **EUROPEAN PATENT SPECIFICATION**

(45) Date of publication of patent specification: **23.08.89**

(21) Application number: **85830111.2**

(22) Date of filing: **08.05.85**

(51) Int. Cl.⁴: **B 60 G 17/08,** F 16 F 9/46

(54) Device for the control of the suspension shock-absorbers particularly for motor vehicles.

(30) Priority: **11.05.84 IT 6747884**

(43) Date of publication of application:
**27.11.85 Bulletin 85/48**

(45) Publication of the grant of the patent:
**23.08.89 Bulletin 89/34**

(84) Designated Contracting States:
**DE FR GB SE**

(56) References cited:
**EP-A-0 027 869**
**EP-A-0 080 291**
**EP-A-0 114 700**
**EP-A-0 114 757**
**EP-A-0 151 421**
**DE-A-2 043 526**
**FR-A-1 079 482**
**FR-A-2 313 224**
**GB-A-1 604 416**
**US-A-3 035 853**
**US-A-3 124 368**
**US-A-3 606 365**
**US-A-4 333 668**

(73) Proprietor: **FIAT AUTO S.p.A.**
**Corso Giovanni Agnelli 200**
**I-10135 Torino (IT)**

(72) Inventor: **Egidi, Corrado**
**Corso Montecucco 84/D**
**I-10100 - Torino (IT)**
Inventor: **Rossi, Carlo**
**Via Cimabue 6**
**I-10100 - Torino (IT)**
Inventor: **Filippa, Paolo**
**Via Pizzi 3**
**I-10100 - Torino (IT)**

(56) References cited:
**PATENTS ABSTRACTS OF JAPAN, vol. 7, no. 1 (M-183) 1146r, 6th January 1983; & JP - A - 57 160 707 (KAYABA KOGYO K.K.) 04-10-1982**

**PATENTS ABSTRACTS OF JAPAN, vol. 7, no. 29 (M-191) 1174r, 5th February 1983; & JP - A - 57 182 506 (KAYABA KOGYO K.K.) 10-11-1982**

**PATENTS ABSTRACTS OF JAPAN, vol. 7, no. 55 (M-198) 1200r, 5th March 1983; & JP - A - 57 201 707 (NIPPON DENKI K.K.) 10-12-1982**
**International Journal of Vehicle design, Vol. 4 pages 233-244, 463-472**

Courier Press, Leamington Spa, England.

EP 0 162 818 B1

## Description

The invention relates to a device for the control of shock absorbers as specified in the preamble of claim 1, for example as disclosed in the patent specification US—A—4333668.

In the usual motor vehicles the shock-absorber response is predetermined duly calibrating the shock-absorber during its construction to guarantee a reasonable compromise between the vehicle stability and the comfort also in the most critical utilization conditions.

In any case this calibration cannot be varied, while the vehicle utilization conditions might require shock-absorbers calibrated in a different way, depending on the type of road or on the type of drive.

Devices are already known which can vary the shock-absorber response according to the user's wishes by an appropriate manoeuvre or automatically, according to certain vehicle utilization parameters, such as vehicle loading, speed, centrifugal force in curve, road surface.

Such systems however have the inconvenience that they may be used not properly by the users who can choose an adjustment different from the one really useful in certain conditions, if not even dangerous, or they may be automatically controlled by parameters which only approximately represent the real need of a change in the calibration of the shock-absorbers.

Purpose of the present invention is to realize a device for the automatic control of the suspension shock-absorbers, particularly for motor vehicles, allowing the shock-absorbers to realize their damping effects between suspensions and motor vehicle body, only when it is necessary to gaurantee the best riding comfort and the best road/pneumatic adhesion.

The present invention attains the above mentioned purposes through a device for the control of the suspension shock-absorbers, particularly for motor vehicles, characterized by the features specified in the characterizing portion of claim 1.

The present invention will now be described with reference to the accompanying drawings supplied only as non limiting examples, in which:

Fig. 1 represents a block diagram of the device object of the present invention;

Fig. 2 represents a block diagram of a detail of Fig. 1;

Fig. 3 represents a longitudinally sectioned shock-absorber.

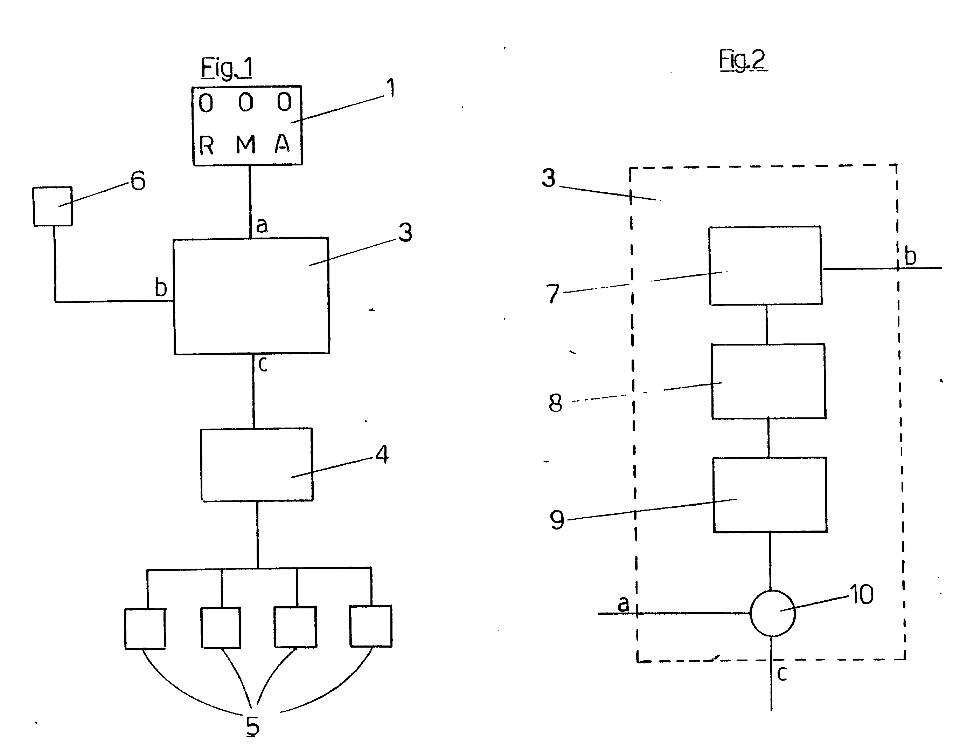

In Fig. 1 with numeral 1 it is indicated a control panel for the selection of the desired type of control connected in point A to an electronic control unit 3 detailed in Fig. 2.

The control unit is connected in point C with a power stage 4 connected to the valves 5 (e.g. of electromagnetic type) for the switching of the shock-absorber response, as it will be explained below.

A detector of frequency and oscillation amplitude 6 is connected to the control unit 3 in point B.

Fig. 2 represents a block diagram of the electronic control unit 3 of Fig. 1; with numeral 7 it is indicated an amplifier connected to the detector 6; the amplifier 7 is connected to a band-pass filter and to a related frequency/tension converter 8 connected in turn to a threshold discriminator 9 which is connected to a selector circuit 10.

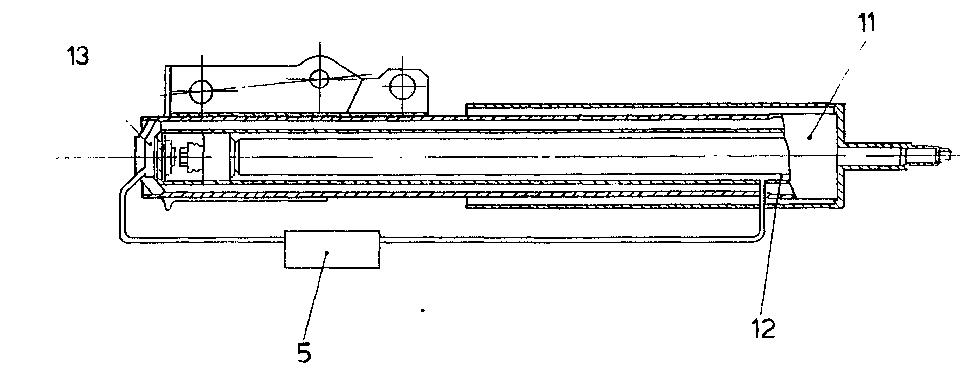

In Fig. 3 with numeral 11 it is indicated a shock-absorber whose chambers 12 and 13 are connected by one of the valves 5 of Fig. 1.

The functioning of the device object of the present invention is as follows.

The driver operating on the keys of the control panel 1 decides if he wants a fixed (hard or soft) calibration or an automatically variable one, as a function of the road conditions.

If he decides to act in a fixed way, he will operate keys R or M (hard or soft) of panel 1; in the first case (hard response) he will send to the control unit 3 signals which will activate the valves 5 to cut the communication between the chambers 12 and 13 of the shock-absorbers 11 and consequently will cause a hard response of same.

If the driver operates key M (soft response), to the control unit 3 will be sent signals which will activate the valves 5 to open the above mentioned communication, so that the fluid flow through the upper and the lower part of the shock-absorbers 11 will be more quick (less braked) and the response of the shock-absorbers will be softer.

If, on the contrary, it is wanted a system able to automatically vary the response of the shock-absorbers depending on the road conditions, it must be operated key A of panel 1; by this way the control unit will be exclusively controlled by the signals supplied by the detector of frequency and oscillation amplitude 6.

The signal coming from the detector 6 is amplified by the amplifier 7 and then filtered in the band from 1 to 20 Hz by band-pass filter 8 and converted from frequency into tension.

The signal coming from block 8 reaches the threshold discriminator 9 which will control the power stage 4, so as to close the valves 5 for a predetermined period of time (about 1 sec.) if the signal coming from block 8 exceeds a prefixed threshold stored in block 9 itself and corresponding to the shaking value of the motor vehicle, at which the passengers begin to feel carsick or to be troubled by the oscillations in resonance with the oscillation frequencies of the vehicle body and/or wheels.

As soon as the signals coming from detector 6 do not exceed any more the above mentioned threshold, the valves 5 will be reopened so that the shock-absorbers return to the soft response.

Naturally by this way the damping effect of the shock-absorbers between suspensions and vehicle body takes place only when it is necessary to guarantee the best riding comfort and the best road adhesion.

Always in the field of the present invention, the device can be varied, e.g. the accelerometric signals may be indicatuve of the vertical accelerations of the wheel hubs, so to display anomalous oscillations and to prevent loss of adhesion; they could also be indicative of the braking, of the speed, of the acceleration in curve, etc.

A simplified control unit could be used so that the response variations of the shock-absorbers are exclusively automatic; instead of accelerometers, it could be used proximity sensors.

The soft calibratin of the shock-absorbers could also be characterized by the almost complete absence of damping effect.

## Claims

1. A device for the control of the suspensions shock absorbers of a motor vehicle, including:

electric sensor means (6) for sensing conditions of the motor vehicle body;

electrically operable valve means (5) coupled to the said shock absorbers (11, 13) and capable of modifying the response thereof;

an electronic control unit (3, 7, 10) capable of driving said valve means (5) as a function of the signals generated by said sensor means (6) characterised in that it further comprises:

a control panel (1) connected to said electronic control unit (3) and including:

first and second manually operable control means (R, M; A) for applying first and second control signals to said electronic unit (3) for the selection of a fixed and an automatic calibration for the shock absorbers (11, 13) respectively;

in that said said sensor means (6) include detectors for sensing the frequency and the amplitude of the oscillations of the motor vehicle body; and

in that the said electronic control unit (3) is programmed for driving the valve means (5)·in accordance with the resonance frequencies signals from the said detectors, when said second manually operable control means (A) have been operated.

2. Device according to Claim 1, wherein said first manually operable control means (R, M) are capable of allowing the selective application of two different fixed calibration signals to said electronic control unit (3).

3. Device according to Claim 1 or 2, wherein the electronic control unit (3) includes an amplifier (7), a band-pass filter and a frequency/voltage converter (8) and a threshold discriminator (9) coupled to a selector device (10).

## Patentansprüche

1. Vorrichtung zur Steuerung der Schwingungsdämpfer der Radaufhängung eines Kraftfahrzeugs, umfassend

eine elektrische Sensoreinrichtung (6) zum Erfassen der Zustände des Fahrzeugaufbaus,

elektrisch betätigbare Ventile (5), die mit den Schwingungsdämpfern (11, 13) verbunden sind und zu deren Ansprechmodifizierung dienen,

eine elektronische Regeleinrichtung (3, 7, 10) zur Betätigung der Ventile (5) in Funktion der von der Sensoreinrichtung (6) erzeugten Signale, dadurch gekennzeichnet,

daß ferner eine Schalttafel (1) vorgesehen ist, die mit der elektronischen Regeleinrichtung (3) verbunden ist und erste sowie zweite, jeweils manuell zu betätigende Steuerorgane (R, M; A) aufweist, welche zur Wahl einer festen bzw. einer automatischen Kalibrierung der Schwingungsdämpfer (11, 13) erste bzw. zweite Steuersignale an die Regeleinrichtung (3) leitet,

daß die Sensoreinrichtung (6) Fühler zum Erfassen der Frequenzen und der Amplitude der Schwingungen des Fahrzeugaufbaus haben und

daß die elektronische Regeleinrichtung (3) so programmiert ist,

daß sie die Ventile (5) in Übereinstimmung mit den Resonanzfrequenz-Signalen der Fühler ansteuert, wenn die zweiten manuell zu betätigenden Steuerorgane (A) angewählt worden sind.

2. Vorrichtung nach Anspruch 1, dadurch gekennzeichnet, daß die ersten manuel zu betätigenden Steuerorgane (R, M) wahlweise zwei unterschiedlich fixierte Kalibrierungssignale an die elektronische Regeleinrichtung (3) leiten können.

3. Vorrichtung nach Anspruch 1 oder 2, dadurch gekennzeichnet, daß die elektronische Regeleinrichtung (3) einen Verstärker (7), einen Bandpaßfilter, einen Frequenz/Spannungs-Wandler (8) sowie einen Schwellenwertdetektor (9) aufweist, welcher mit einer Wähleinrichtung (10) verbunden ist.

## Revendications

1. Dispositif pour la commande des amortisseurs de suspension d'un véhicule automobile, comprenant:

des moyens capteurs électriques (6) destinés à capter les conditions de la caisse du véhicule automobile;

des moyens du type soupape (5) commandés électriquement, couplés auxdits amortisseurs (11, 13) et capables de modifier leur réponse;

une unité de commande électronique (3, 7, 10) capable d'actionner lesdits moyens du type soupape (5) en fonction des signaux engendrés par lesdits moyens détecteurs (6), caractérisé en ce qu'il comprend en outre:

un panneau de commande (1) connecté à ladite unité de commande électronique (3), et comprenant:

des premiers et deuxièmes moyens de commande manoeuvrés manuellement (R, M; A), destinés à appliquer des premiers et deuxièmes signaux de commande à ladite unité électronique (3) pour effectuer la sélection entre un étalonnage fixe et un étalonnage automatique pour les amortisseurs (11, 13) respectivement;

en ce que lesdits moyens capteurs (6) comprennent des détecteurs destinés à capter la fréquence et l'amplitude des oscillations de la caisse du véhicule automobile; et

en ce que ladite unité de commande électronique (30) est programmée pour commander les moyens du type soupape (5) en fonction des signaux de fréquence de résonance issus desdits détecteurs, lorsque lesdits deuxièmes moyens de commande (30) manoeuvrés manuellement ont été actionnés.

2. Dispositif selon la revendication 1, dans lequel lesdits premiers moyens de commande manoeuvrés manuellement (R, M) permettent d'appliquer sélectivement deux signaux d'étalonnage fixe différents à ladite unité de commande électronique (3).

3. Dispositif selon la revendication 1 ou 2, dans lequel l'unité de commande électronique (3) comprend un amplificateur (7), un filtre passe-bande, un convertisseur fréquence/tension (8), et un dis-criminateur à seuil (9) couplé à un dispositif sélecteur (10).

Fig.1

Fig.2

1

| 0 | 0 | 0 |
| R | M | A |

6

a

b

3

c

4

5

3

7

b

8

9

a

10

c

EP 0 162 818 B1